# EUROPEAN PATENT APPLICATION

(11) **EP 1 333 664 A1**
(43) Date of publication of application: **06.08.2003**
(21) Application number: 02259020.2
(22) Date of filing: 30.12.2002
(51) Int. Cl.: H04N 5/00

(54) **Electronic apparatus and method therefor**

(30) Priority: 01.02.2002 GB 0202377
(71) Applicant: Audio Partnership Plc, London SE1 4BB (GB)
(72) Inventor: Bramble, Matthew Forbes, c/o Audio Partnership Plc, London SE1 4BB (GB)
(74) Representative: Evens, Paul Jonathan

(57) **Abstract**

A distributed entertainment system, particularly but not exclusively a distributed entertainment system for domestic use. The distributed entertainment system comprises: at least one command unit (22) for one or more user zones (24), the or each command unit being configured to receive commands from a user; and a hub (26) for receiving command signals from the or each command unit, the hub having means for transmitting control signals for controlling audio/visual source equipment in dependence upon received command signals; characterised by a control signal storage unit (34) for storing dedicated control signals specific to audio/visual equipment to be controlled, and by the hub having an input facility (38) for receiving and storing dedicated control signals from the control signal storage unit, whereby the hub is configured to transmit dedicated control signals in dependence upon received command signals.

## Description

The present invention relates to an entertainment system, particularly but not exclusively to a distributed entertainment system for domestic use.

A distributed home entertainment system typically comprises audio/visual source equipment, such as CD player, DVD, VCR and the like, which is located in one room and linked to several zones, e.g. rooms, in the home. Such a system often includes a hub, which is situated near the audio/visual source equipment and which links the audio/visual source equipment to the various zones. Such a system usually includes a command unit in each zone, which a person can use to exert control over certain characteristics of the output of a selected component of the audio/visual source equipment, e.g. volume or sound characteristics such as bass or treble, etc. The command unit might also allow the person to exert control over an audio/visual source equipment component to cause it to carry out commonly used functions, e.g. stop, play and track change. In order to exert such control, distributed entertainment systems typically need to be able to generate commands in the form of Infra Red, electrical or other signals that the audio/visual source equipment responds to.

A significant limitation of such a conventional home entertainment system can be encountered when an audio/visual source equipment component is to be installed or changed. Each installed or changed audio/visual source equipment component may respond to a completely different set of control signals from those of the old component, even if the component is of the same type (for example, a CD player), thus requiring each command unit to be modified to send a new set of signals.

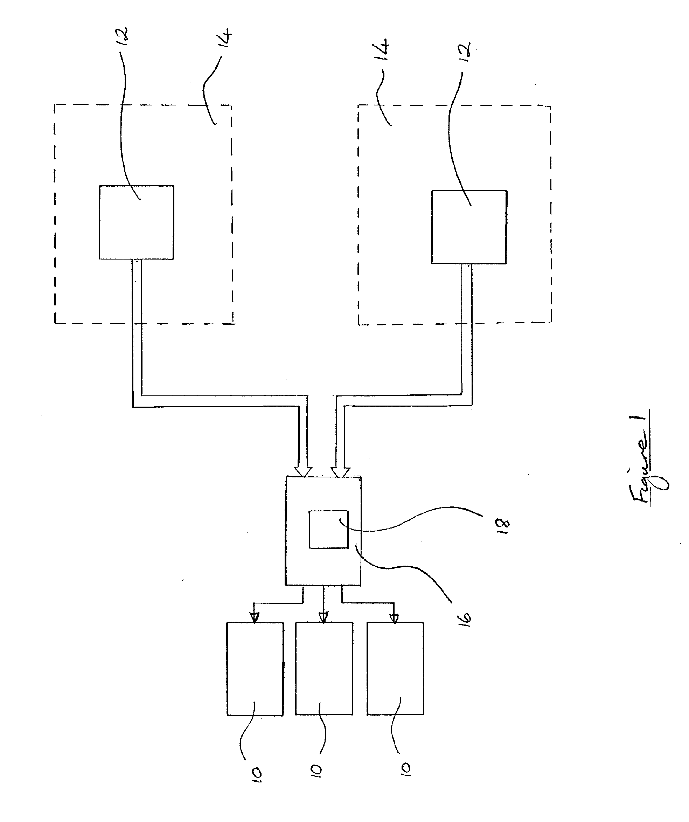

In more recent systems, the burden of having to modify each command unit has been eased to some extent by the use of an arrangement of distributed home entertainment system as shown in Figure 1. In this arrangement, the audio/visual source equipment components 10 respond to control signals, which are different to the command signals sent by a command unit 12 located in each of several zones 14. According to the arrangement, the command signals sent by a command unit are translated in the hub 16, for example by means of a look-up table 18, to the audio/visual source equipment system control signals. When an audio/visual source equipment component is replaced, the look up table is modified to translate the command signals to the control signals of the new component. This approach has the advantage of obviating the need to reconfigure each command unit when an audio/visual source equipment component is replaced. However, a significant limitation of this system is that it relies on the look up table to include the control codes for all the possible source components that the user may wish to use. Over time new forms and types of equipment will become available which will use new or different codes and thus require modification of the look up table. This is a task of some sophistication that requires specialised equipment. Therefore, a user is normally unable to modify the hub to take account of a change in audio/visual source equipment components.

A recent development has been the provision of an interface that is integral to the entertainment system hub, which allows the user to input control codes for new forms and types of equipment. However, this approach can have disadvantages.

The present inventor has appreciated the shortcomings of conventional distributed entertainment systems and it is from this appreciation that the invention has arisen.

Accordingly from a first aspect, this invention provides a distributed entertainment system for controlling audio/visual source equipment, comprising: at least one command unit for one or more user zones, the or each command unit being configured to receive commands from a user; and a hub for receiving command signals from the or each command unit, the hub having means for transmitting control signals for controlling audio/visual source equipment in dependence upon received command signals; characterised by a control signal storage unit for storing dedicated control signals specific to audio/visual equipment to be controlled, and characterised the hub having an input facility for receiving and storing dedicated control signals from the control signal storage unit, whereby the hub is configured to transmit dedicated control signals in dependence upon received command signals.

In use, the distributed entertainment system can be configured to send a new control signal to a new audio/visual source equipment component in response to an existing command received from a command unit. Thus, there is normally no need to modify each command unit within the home entertainment system when, for example, an audio/visual source equipment component is replaced.

The provision of the control signal storage unit can address certain shortcomings of the known entertainment system hub with the integral input facility. For example, according to the present invention the control signal storage unit can be used independently of the hub to store dedicated control signals. Thus, the hub of the present invention does not need to be set up and switched on. Furthermore, the control signal storage unit can be used to store dedicated control signals at a location remote from the hub, e.g. by the vendor to carry out an in-service update. The control signal storage unit can also allow the user to store a set of dedicated control signals, perhaps from several audio/visual source equipment components, before transferring the stored signals to the hub in one step.

The hub may be operative to receive and store a dedicated control signal in response to user activation of a functional input associated with audio/visual source equipment. Activating the functional input can cause the sending of a corresponding dedicated control signal to which the audio/visual source equipment responds. The functional input might, for example, be a play button on a CD-player. Thus, a user can store a dedicated control signal in the hub without having to input the dedicated control signal itself into the hub.

Recently, learning remote control units have become available. A learning remote control can be programmed with the control signals of more than one audio/visual equipment component to allow the learning remote control to take the place of the component specific remote controls. US 5,229,763 and US 5,691,710 describe remote controllers with a learning function.

Thus, the control signal storage unit may be a learning remote control unit, which is separate from the hub, perhaps a hand-held learning remote control unit.

In use, the control signals for each of the various entertainment system components can be stored in the learning remote control unit and then transferred to the hub by means of the input facility. Portability of the learning remote control unit and its learning capabilities can provide a convenient and easy to use means of configuring the entertainment system.

More specifically, the learning remote control unit may comprise a first user operable input means for sending a predetermined control signal, and a second user operable input means, which is configurable to send a dedicated control signal. The input means might, for example, be a button on a keypad.

According to this embodiment, user activation of the first input means can send a predetermined control signal, for example a control signal that causes an audio/visual source equipment component to switch-off. The first input means might be factory set to send the predetermined control signal. The second user operable input means can, for example, be configured by a user to send a dedicated control signal for an entertainment system component.

Many audio/visual source equipment components can be controlled by means of a remote control unit. Thus, in an embodiment, the control signal storage unit may be operative to store a dedicated control signal sent from a remote control unit of an audio/visual source equipment component. In use, a user can press a functional input, e.g. the play button, on the remote control unit of the audio/visual source equipment and the corresponding control signal is received by and stored in the control signal storage unit. The stored dedicated control signal can then be transferred to the hub.

According to such embodiments, the stored dedicated control signal can be input to the hub, for example by way of a cable connecting the control signal storage unit to the input facility of the hub. Thus, the control signal storage unit can provide a convenient means of obtaining and storing a number of control signals from a variety of audio/visual source equipment components.

The audio/visual source equipment of the invention may include not only entertainment equipment, such as that mentioned above, but also other controllable devices, such as lighting or air conditioning units.

From a second aspect, this invention provides a method of configuring a distributed entertainment system, comprising: providing at least one command panel in one or more user zones, and a hub for receiving command signals from the command panel; characterised by: determining control signals for controlling specific audio/visual source equipment in the distributed entertainment system; storing the control signals in a control signal storage unit; inputting the stored control signals into the hub; and storing the control signals in the hub such that the hub transmits the stored control signals in dependence upon received command signals.

The carrying out of certain audio/visual source equipment functions can be dependent on the reception of more than one control signal. For example, causing a VCR to commence recording can involve sequentially activating the 'play' and 'record' controls. Thus, the method of this invention may comprise storing two or more control signals corresponding to an audio/visual source equipment function such that the hub transmits the stored control signals in dependence upon a single received command signal.

From a third aspect, this invention provides an entertainment system comprising: a control signal storage unit for storing, in response to a user action, a control signal to which audio/visual source equipment responds; and a hub which is user configurable to map to the stored control signal a command signal, sent in response to a user action, by a command unit, whereby in use the stored control signal is received by the audio/visual source equipment in response to the command signal being sent.

In an embodiment, the control signal storage unit may be independent of the hub. More specifically, the control signal storage unit may be a learning remote control unit, e.g. a hand-held learning remote control unit.

In another embodiment the control signal storage unit may be a learning remote module within the hub. According this embodiment, the learning remote control module might have the learning features but lack the control features of the learning remote control unit.

According to a fourth aspect, this invention provides a method of configuring an entertainment system comprising: storing, in response to a user action, a control signal to which audio/visual source equipment responds in a control signal storage unit, transferring the stored control signal to the hub, configuring a hub in the entertainment system to map to the stored control signal a command signal sent, in response to a user action, by a command unit, whereby the stored control signal is received by the audio/visual source equipment in response to the command signal being sent.

Providing the control signal storage unit separately from the hub can allow the control signal storage unit to be positioned at a location that is convenient for user operation, or perhaps even moved from location to location. Most advantageously, the method may comprise providing the control signal storage unit as a hand-held unit.

According to a fifth aspect of the present invention, there is provided a distributed entertainment system for controlling audio/visual source equipment, comprising: at least one command unit for one or more user zones, the or each command unit being configured to receive commands from a user; and a hub for receiving command signals from the or each command unit, the hub having means for transmitting control signals for controlling audio/visual source equipment in dependence upon received command signals; characterised in that the hub has an input facility for receiving and storing dedicated control signals specific to audio/visual equipment to be controlled, whereby the hub is configured to transmit dedicated control signals in dependence upon received command signals.

It is to be appreciated that the entertainment system according to the second and fourth aspects of the invention may include any one or more of the features described above with reference to the first and third aspects of the invention.

Specific embodiments of the present invention will now be described, by way of example, and with reference to the accompanying drawings in which:
Figure 1 is a block diagram of a conventional distributed entertainment system;
Figure 2 is a block diagram of a distributed entertainment system embodying the invention;
Figure 3 is a block diagram of the learning remote control unit of Figure 2;
Figure 4 is a block diagram of the hub of Figure 2; and
Figure 5 is a flow chart representation of a method of configuring the entertainment system of Figure 2.

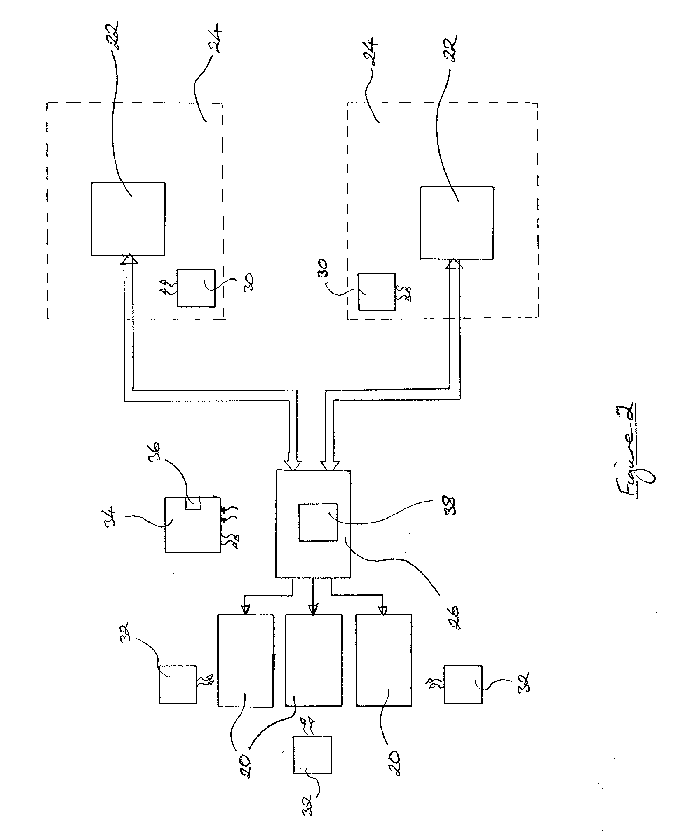

A block diagram of a distributed entertainment system embodying the invention is shown in Figure 2. The entertainment system comprises several audio/visual source equipment components 20, such as CD player, DVD, VCR and the like, a command unit 22 located in each of several rooms 24, and a hub 26 which links the command units to the audio/visual source equipment. A command unit 22 might be installed on a wall of a room 24 and be capable of being controlled by a dedicated remote control unit 30. Each audio/visual source equipment component 20 has its own dedicated remote control unit 32. The entertainment system also comprises a learning remote control unit 34 (which constitutes a control signal storage unit), which is provided with a communications port 36. The hub 26 is provided with a communications port 38 for connection to the communications port 36 of the learning remote control unit.

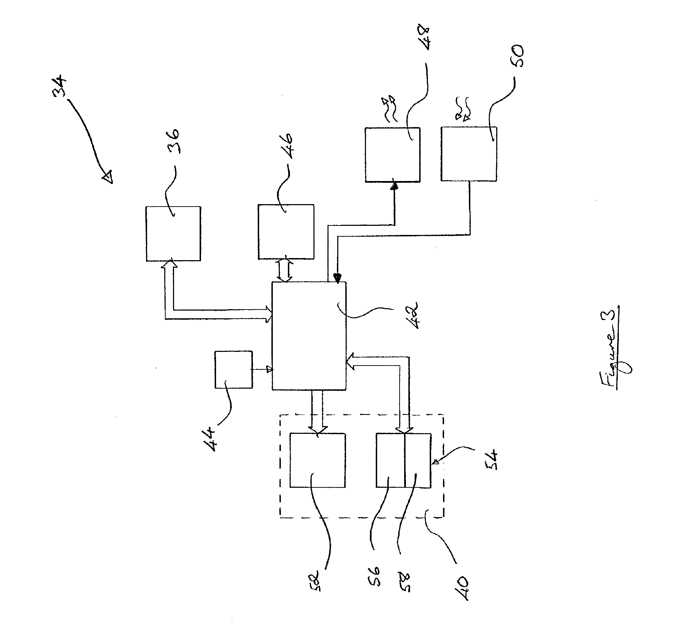

Figure 3 is a block diagram of the learning remote control unit 34 of Figure 2. The learning remote control unit is conventional in so far as it comprises a user interface 40, a microcontroller unit 42, which is driven by a clock 44, memory 46, an infra-red (IR) output circuit 48 and an IR input circuit 50. The user interface 40 comprises a display circuit 52 and a keypad 54. Conventional learning remote control units are described, for example, in US 5,229,763 and US 5,691,710. The communications port 36, which is also shown in Figure 2, is in addition to the conventional components. The communications port 36 might operate according to any appropriate serial or parallel communications standard, e.g. RS-232. The keypad of the learning remote control has hard-coded keys 56 (constituting user operable input means for sending a predetermined control signal) and soft coded keys 58 (constituting user operable input means, which is configurable to send a dedicated control signal). The hard-coded keys are preset, usually at the factory, to send certain control signals, e.g. system component switch on or off. The soft-coded keys can be user configured by the learning procedure to send dedicated control signals.

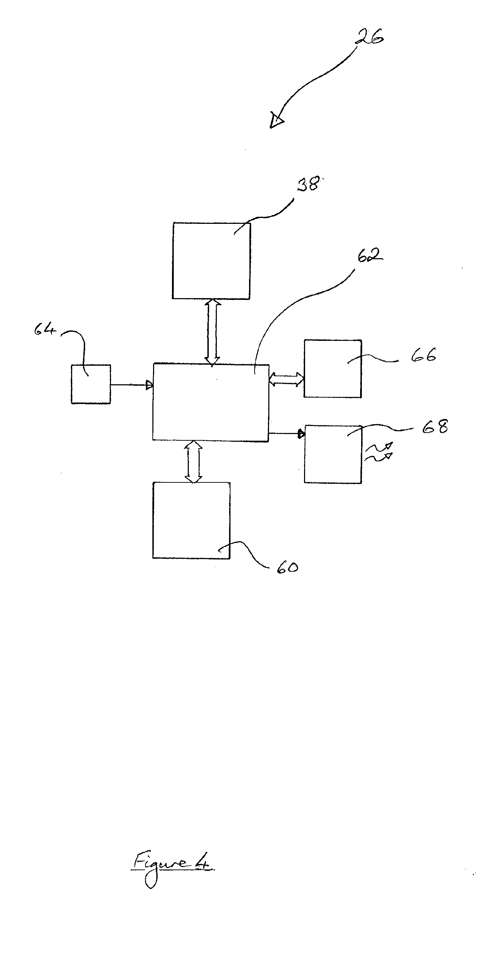

Figure 4 is a block diagram of the hub 26 of Figure 2. The hub comprises a component 60, which represents the hub control circuitry, a microprocessor unit 62, which is driven by a clock 64, a memory 66 and an IR output circuit 68 for sending control signals to the audio/visual source equipment components. The hub communications port 38 is also shown in Figure 2 and should operate according to the same communications standard as the learning remote control unit communications port 36.

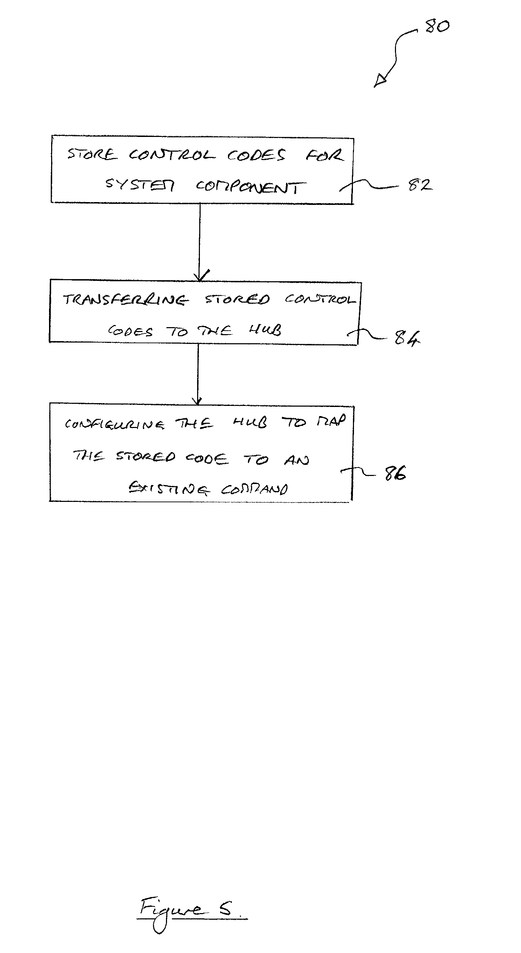

According to a mode of operation 80 and with reference to Figures 2 to 5, the learning remote control unit 34 is used to store control signals for a new audio/visual source equipment component 20, 82. This step is well known in the art, and typically involves the user aligning the learning remote control unit 34 with a remote control unit 32 of an audio/visual source equipment component and pressing a button, e.g. the play button, on the source equipment component remote control unit 32 to send a control signal to the learning remote control unit 34. A control signal pair comprising the sent control signal and a function identifier are stored in the learning remote control unit 34. This process is repeated until the requisite control signals have been stored in the learning remote control unit 34.

The stored control signal pairs are transferred to the hub 26, 84 by connecting the communications port 36 of the learning remote control unit 34 to the communications port 38 of the hub by a cable. The insertion of the cable into the communications port 38 of the hub might generate an interrupt signal, which puts the hub into a state of readiness to accept the stored control signal pairs.

The hub 26 is configured by mapping the stored control signal to an existing command sent by a command unit 22, 86. Mapping involves using the function identifier to store its paired control signal in a predetermined location in the hub memory 46. Each function identifier has its own predetermined location in memory. Thus, when a user activates the function on a command unit 22, e.g. by pressing the play button, a command signal is sent to the hub. The command signal is conveyed to the predetermined memory location where it is translated to the new control signal, and the new control signal is transmitted to the new source equipment component.

It will be readily appreciated by the skilled person that the learning remote control unit 34 may be incorporated in the hub 26 itself. In this form, it will be appreciated that the control features of unit 34 are not required and that the unit need only comprise learning features.

It is to be appreciated that the system, method and other features described with reference to the embodiment discussed above can be combined in other embodiments of the present invention.

## Claims

1. A distributed entertainment system for controlling audio/visual source equipment (20), comprising:
at least one command unit (22) for one or more user zones (24), the or each command unit being configured to receive commands from a user; and
a hub (26) for receiving command signals from the or each command unit, the hub having means for transmitting control signals for controlling audio/visual source equipment in dependence upon received command signals;
**characterised by** a control signal storage unit (34) for storing dedicated control signals specific to audio/visual equipment to be controlled, and
by the hub having an input facility (38) for receiving and storing dedicated control signals from the control signal storage unit,
whereby the hub is configured to transmit dedicated control signals in dependence upon received command signals.

2. A distributed entertainment system as claimed in claim 1, in which the hub is operative to receive and store a dedicated control signal in response to user activation of a functional input associated with audio/visual source equipment.

3. A distributed entertainment system as claimed in claim 1 or claim 2, in which the control signal storage unit is a learning remote control unit.

4. A distributed entertainment system as claimed in claim 3, in which the learning remote control unit comprises a first user operable input means for sending a predetermined control signal, and a second user operable input means, which is configurable to send a dedicated control signal.

5. A distributed entertainment system as claimed in any preceding claim, in which the control signal storage unit is operative to store a dedicated control signal sent from a remote control unit of an audio/visual source equipment component.

6. A distributed entertainment system as claimed in any preceding claim, in which audio/visual source equipment of the invention comprises a controllable device.

7. A distributed entertainment system as claimed in claim 6, in which the controllable device is a lighting or air conditioning unit.

8. A method of configuring a distributed entertainment system (80), comprising:
providing at least one command panel (22) in one or more user zones (24), and a hub (26) for receiving command signals from the command panel; **characterised by**:
determining control signals for controlling specific audio/visual source equipment (20) in the distributed entertainment system;
storing the control signals in a control signal storage unit (34,82);
inputting the stored control signals into the hub (84); and
storing the control signals in the hub such that the hub transmits the stored control signals in dependence upon received command signals (86).

9. A method of configuring a distributed entertainment system as claimed in claim 8, comprising storing two or more control signals corresponding to an audio/visual source equipment function such that the hub transmits the stored control signals in dependence upon a single received command signal.
